(19) Europäisches Patentamt
European Patent Office
Office européen des brevets

(11) EP 4 163 320 A1

(12) DEMANDE DE BREVET EUROPEEN

(43) Date de publication:
**12.04.2023 Bulletin 2023/15**

(21) Numéro de dépôt: **22211994.3**

(22) Date de dépôt: **24.06.2016**

(51) Classification Internationale des Brevets (IPC):
***C08G 69/40*** *(2006.01)* ***C08L 77/00*** *(2006.01)*

(52) Classification Coopérative des Brevets (CPC):
**C08G 69/40; C08L 77/06**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2015 FR 1556000**

(62) Numéro(s) de document de la (des) demande(s) initiale(s) en application de l'article 76 CBE:
**16176258.8 / 3 109 273**

(71) Demandeur: **ARKEMA FRANCE**
**92700 Colombes (FR)**

(72) Inventeurs:
- **EUSTACHE, Rene-Paul**
  **27470 SERQUIGNY (FR)**
- **SABARD, Mathieu**
  **27470 SERQUIGNY (FR)**
- **DEYRAIL, Yves**
  **27470 SERQUIGNY (FR)**
- **PINEAU, Quentin**
  **27470 SERQUIGNY (FR)**
- **TURAN-ALTUNTAS, Inci**
  **27470 SERQUIGNY (FR)**
- **POUZET, Martin**
  **400050 MUMBAI (IN)**
- **YOSHITAKE, Atsushi**
  **117528 SINGAPORE (SG)**

(74) Mandataire: **Arkema Patent**
**Arkema France**
**DRD-DPI**
**420, rue d'Estienne d'Orves**
**92705 Colombes Cedex (FR)**

Remarques:
Cette demande a été déposée le 07.12.2022 comme demande divisionnaire de la demande mentionnée sous le code INID 62.

# (54) PEBA POUR ADHERENCE DIRECTE SUR TPE

(57) L'invention concerne un copolymère à blocs polyamide PA et blocs polyéther PE, dans lequel PA est de type diamine.diacide X.Y, X le nombre de carbones de la diamine est compris dans la gamme de 6 à 14, et Y le nombre de carbones du diacide est compris dans la gamme de 6 à 18. L'invention concerne également l'utilisation dudit copolymère dans un procédé d'adhérence directe entre deux matériaux TPE pour augmenter la force de pelage entre ces matériaux.

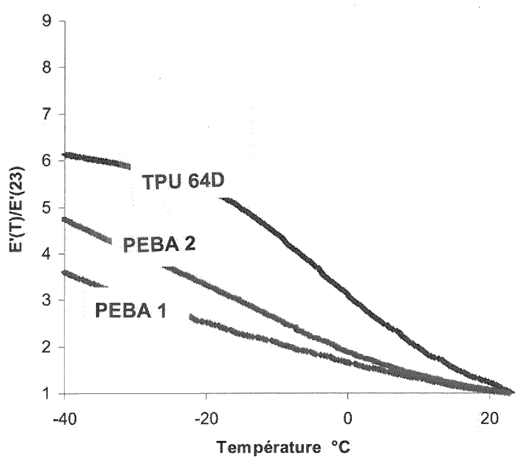


Figure 1

EP 4 163 320 A1

## Description

DOMAINE DE L'INVENTION

La présente invention concerne un nouveau copolymère à blocs polyamides PA et blocs polyéthers PE (abrégé PEBA), particulièrement bien adapté au procédé d'adhérence directe, sur un substrat à base d'élastomère thermoplastique (abrégé TPE), notamment sur TPU.

La présente invention concerne également l'assemblage par adhérence directe d'un premier substrat à base de PEBA selon l'invention (C1) et d'un second substrat (C2), les substrats pouvant être de même nature ou de nature différente. La présente invention concerne en outre un produit stratifié formé par l'assemblage de tels substrats par adhérence directe.

La présente invention concerne notamment un procédé de fabrication d'un tel stratifié et son utilisation dans l'industrie de la chaussure, notamment pour la fabrication de semelles et tout particulièrement de semelles de chaussures de sport.

ARRIERE-PLAN TECHNIQUE

Un des principaux savoir-faire de l'industrie de la chaussure réside dans une bonne maîtrise des techniques de collage destinées à assembler des matériaux de nature chimique et de propriétés mécaniques différentes. Ce savoir-faire est particulièrement important dans le domaine de la chaussure de sport où les matériaux utilisés, notamment pour la fabrication des semelles, sont fréquemment des matériaux nouveaux. Cette exigence est décuplée par la recherche de la performance généralement liée à la chaussure de sport.

Durant la dernière décennie les matériaux à base de TPE, tels que les matériaux PEBA commercialisés par la société Arkema sous la marque Pebax® se sont progressivement imposés dans le domaine de la chaussure haut de gamme, en particulier de sport, grâce à leurs propriétés mécaniques et notamment leur propriété de retour élastique exceptionnel. En effet, les PEBA peuvent être avantageusement utilisés dans les chaussures de sport en tant que semelle de type "semi-rigide" (foot-ball, base-bail,...) ou souple (jogging) permettant de réaliser directement la semelle interne (amortissement) et/ou la semelle externe (tenue à l'abrasion-rigidité).

L'assemblage de TPE sur des TPE de même nature ou de compositions différentes est obtenu par moulage ou extrusion, éventuelle découpe des composants, puis collage et pressage de ces composants, ou encore par adhérence directe de ces TPE.

Par « procédé d'adhérence directe », on entend un procédé d'adhérence sans apport de liant, notamment sans apport de colle ou adhésif. Comparativement aux procédés classiques de collage impliquant une multitude d'étapes compliquées utilisant généralement des adhésifs à base de solvants organiques, les procédés d'adhérence directe sont plus économiques et non polluants.

A titre d'exemple de procédé d'adhérence directe, on peut citer : le surmoulage, le pressage à chaud, la coextrusion, le thermoformage, l'injection bi-matière, la co-injection, l'injection bi-matière, et toute autre méthodes d'adhérence possible utilisant une ou plusieurs des méthodes classiques telles que le moulage par injection, le moulage par extrusion et/ou le moulage par soufflage.

Cette cohésion entre les matériaux est rendue possible par les propriétés adhésives que possèdent les polymères à l'état fondu. Par exemple, le document de brevet EP197845 décrit un procédé d'assemblage de surfaces par application d'un joint de PEBA et fusion de sa couche superficielle. Le document de brevet EP179700 décrit une composition adhésive comprenant un PEBA et son utilisation en tant qu'adhésif sensible à la pression. Le document de brevet EP0679119 décrit un objet bicouche comprenant un élastomère thermoplastique allégé de type polyétheramide adhérant en lui-même sur un thermoplastique non allégé pouvant être choisi parmi les polyétheramides, polyétheresters, polyuréthanes.

La technique du surmoulage consiste en l'injection de matière sur un insert placé au fond du moule. La cohésion des deux matériaux s'obtient par les propriétés de hot melt et de compatibilité de la matière surmoulée et de l'insert. Les PEBA conviennent très bien à cette technique de surmoulage car ils possèdent une large plage de plastification, permettant d'optimiser l'adhérence de la matière et des inserts et d'éviter l'emploi d'adhésif.

Malheureusement, les niveaux d'adhérence, exprimés par la force de pelage, des substrats à base de TPE, des systèmes de l'art antérieur obtenus par adhérence directe, est loin d'être optimale. Ainsi, avec certains des substrats en PEBA de dureté 60 à 65 Shore D en moyenne (par exemple Pebax® 6333) on obtient au mieux des forces de pelage faibles de 3 kg/cm. Or, les fabricants de chaussures imposent pour certaines applications une force de pelage d'au moins 5, de préférence d'au moins 8, voire d'au moins 10 kg/cm.

La présente invention a donc pour but de fournir un PEBA aux propriétés d'adhérence directe améliorées sur substrats TPE, et en particulier sur TPU.

La présente invention a aussi pour but de fournir un stratifié comprenant au moins un substrat à base de PEBA,

ainsi qu'un procédé de fabrication d'un tel stratifié par adhérence directe, le stratifié devant présenter une force de pelage supérieure à 3 kg/cm, de préférence d'au moins 5 kg/cm, de préférence d'au moins 8 kg/cm, voire d'au moins 10 kg/cm, mesurée selon la norme ISO 11339.

La présente invention a encore pour but d'augmenter le niveau d'adhérence des matériaux TPE sans altérer leurs propriétés mécaniques.

La Demanderesse a maintenant développé un nouveau type de PEBA qui présente une adhérence directe sur TPE nettement supérieure à celle des PEBAs existants, avec une force de pelage supérieure à 10 kg/cm, tout en conservant d'excellentes propriétés mécaniques telles qu'une bonne nervosité, une faible densité, et une faible rigidification à froid.

RESUME DE L'INVENTION

L'invention concerne en premier lieu un copolymère à blocs polyamide PA et blocs polyéther PE, dans lequel PA est de type X.Y, X le nombre de carbones de la diamine est compris dans la gamme de 4 à 14, de préférence de 6 à 14, de préférence de 6 à 12 ; et Y le nombre de carbones du diacide est compris dans la gamme de 6 à 18, de préférence de 6 à 12, de préférence de 10 à 12.

Avantageusement, X est choisi parmi 6 ou 10, et Y est choisi parmi 10 ou 12 ; de préférence le PA X.Y est le PA 6.10 ou le PA 6.12 ; de préférence le PA 6.10.

Avantageusement, PE est choisi parmi PTMG, PPG, PO3G et/ou PEG ; de préférence choisi parmi PTMG, PPG et/ou PO3G.

De préférence le copolymère selon l'invention est choisi parmi le PEBA PA6.10-PTMG ou PA6.12-PTMG, de préférence le PA6.10-PTMG.

Avantageusement, ledit copolymère comprend de 51 à 90 % en poids, de préférence de 60 à 90 % en poids, de préférence de 65 à 85 % en poids de blocs polyamide ; et respectivement de 49 à 10% en poids, de préférence de 40 à 10 % en poids, de préférence de 35 à 15 % en poids de blocs polyéther, sur le poids total de copolymère. Selon un autre mode de réalisation, ledit copolymère comprend de 55 à 65 % en poids de blocs polyamide et de 45 à 35% en poids de blocs polyéther, par rapport au poids total du copolymère. Avantageusement, la masse moléculaire moyenne en nombre (Mn) des blocs PA est comprise dans la gamme de 500 à 10000, de préférence de 1000 à 10000, de préférence de 2000 à 9000, de préférence de 2000 à 6000, de préférence de 2000 à 3000, de préférence de 2500 à 3000. Selon un autre mode de réalisation, la masse moléculaire moyenne en nombre (Mn) des blocs PA est comprise dans la gamme de 800 à 900.

Avantageusement, la masse moléculaire moyenne en nombre (Mn) des blocs PE est comprise dans la gamme de 400 à 1000, de préférence de 500 à 1000, de préférence de 600 à 700, voire de 600 à 650.

La présente invention a également pour objet l'utilisation d'un PEBA dans un procédé d'adhérence directe entre deux matériaux TPE pour augmenter la force de pelage entre ces matériaux, caractérisée en ce que le PEBA est un copolymère selon l'invention décrite ci-dessus.

La présente invention a notamment pour objet une composition à base de copolymère selon l'invention décrite ci-dessus, la composition étant caractérisée en ce qu'elle comprend :

- de 51% à 99,9% en poids dudit copolymère,
- de 0,1 à 49% en poids d'au moins un autre composant choisi parmi : les PEBA de composition différente et/ou de module de flexion différent de celle/celui du copolymère, les PA, les POF, les COPE, les TPU, les charges et/ou fibres de renfort, notamment de verre ou de carbone, les colorants, les absorbeurs UV, les antioxydants, notamment phénoliques, ou à base de phosphore ou à base de soufre, les stabilisants lumière de type amine encombrée ou HALS, et leurs mélanges.

La présente invention a encore pour objet un procédé d'adhérence directe d'un matériau copolymère (C1) selon l'invention avec un matériau copolymère TPE (C2), C2 étant de composition identique et de même module de flexion que C1, ou bien de composition identique mais de module de flexion différent de C1, ou bien C2 est un matériau TPE choisi parmi : les PEBA de composition différente de celle dudit copolymère C1, les COPE, et/ou les TPU ; le procédé selon l'invention étant caractérisé en ce que l'assemblage s'effectue par un procédé comprenant le chauffage d'au moins un des deux matériaux copolymères C1 et/ou C2, de façon à faire adhérer un matériau à l'autre. Selon un mode de réalisation avantageux du procédé de l'invention, le matériau C1 est fondu ou ramolli sous chauffage, et le matériau C1 fondu est porté en contact avec au moins une partie du matériau C2 de la série des polyuréthanes thermoplastiques TPU pour faire adhérer les deux matériaux. Selon un deuxième mode de réalisation avantageux du procédé de l'invention, le matériau C2 de la série des polyuréthanes thermoplastiques TPU est fondu ou ramolli sous chauffage, et le matériau C2 fondu est porté en contact avec au moins une partie du matériau C1 pour faire adhérer les deux matériaux. Selon un troisième mode de réalisation avantageux du procédé de l'invention, le matériau C1 et le matériau

C2 de la série des TPU sont indépendamment fondus ou ramollis sous chauffage, et le matériau C1 fondu est porté en contact avec au moins une partie du matériau C2 fondu pour faire adhérer les deux matériaux.

Avantageusement, dans le procédé d'assemblage selon l'invention, le matériau C1 et le matériau C2 sont assemblés par un procédé d'adhérence directe choisi parmi : surmoulage, pressage à chaud, coextrusion, thermoformage, moulage par injection, moulage par extrusion, moulage par soufflage, et leurs mélanges ; de préférence par surmoulage d'un matériau sur l'autre, de préférence par surmoulage du copolymère selon l'invention sur un TPE, de préférence par surmoulage du copolymère sur un TPU. Avantageusement, la température d'assemblage du procédé d'adhérence directe selon l'invention est comprise dans la gamme de 220 à 300°C, de préférence de 250 à 290°C, de préférence de 270 à 290°C.

La présente invention a aussi pour objet un article composite comprenant au moins deux matériaux polymères adhérant directement l'un à l'autre, l'un de composition conforme à l'invention décrite ci-dessus, l'autre en TPE choisi parmi : PEBA identique (de module de flexion différent de celui du copolymère), PEBA de composition différente de celle dudit copolymère, COPE, et/ou TPU.

La présente invention a également pour objet l'utilisation d'un article selon l'invention, pour la fabrication d'un équipement de sport, d'un élément de chaussure, notamment de chaussure de sport, semelle de chaussure, notamment crampon, élément de ski, notamment de chaussure de ski ou de coque de ski, d'un dispositif médical, d'une courroie de transmission, comme additif antistatique, comme film imper-respirant, comme support de molécules actives, comme agent colorant, agent de soudure, comme élément de décoration, et/ou comme additif pour polyamide.

La présente invention permet de surmonter les inconvénients de l'état de la technique. Elle fournit plus particulièrement un PEBA capable d'adhérer directement sur TPU, par chauffage, sans dégrader les matériaux à assembler, tout en apportant une bonne nervosité, une faible densité, et une faible rigidification à froid au matériau stratifié ainsi obtenu.

Ceci est accompli grâce à l'utilisation du PEBA spécifique selon l'invention. Ce résultat est surprenant dans la mesure où les polymères thermoplastiques élastomères polycondensés de haute dureté (60 à 65 Shore D) sont généralement difficiles à assembler par adhérence directe de manière à la fois efficace et durable sur TPU.

## DESCRIPTION DE MODES DE REALISATION DE L'INVENTION

Dans la présente description, on précise que lorsqu'il est fait référence à des intervalles, les expressions du type « allant de... à » ou « comportant/comprenant de... à » incluent les bornes de l'intervalle. A l'inverse, les expressions du type « compris entre... et... » excluent les bornes de l'intervalle.

Sauf mention contraire, les pourcentages exprimés sont des pourcentages massiques. Sauf mention contraire, les paramètres auxquels il est fait référence sont mesurés à pression atmosphérique, et température ambiante (20-25°C, généralement 23°C).

L'invention est maintenant décrite plus en détail et de façon non limitative dans la description qui suit.

Le terme « polymère thermoplastique élastomère », abrégé « TPE », désigne un polymère qui constitue un matériau polyphasique présentant au moins deux transitions, à savoir une première transition à une température T1 (en général il s'agit de la température de transition vitreuse) et une deuxième transition à une température T2 supérieure à T1 (en général il s'agit du point de fusion). A une température inférieure à T1, le matériau est rigide, entre T1 et T2 il a un comportement élastique, et au-dessus de T2 il est fondu. Un tel polymère combine le comportement élastique des matériaux de type caoutchouc avec l'aptitude à la transformation des thermoplastiques.

## Le PEBA selon l'invention utilisé comme matériau ou substrat C1

L'invention a pour objet un copolymère à blocs polyamide PA et blocs polyéther PE (PEBA) particulier, sélectionné pour son aptitude à adhérer directement sur un autre TPE par simple chauffage.

Ce PEBA selon l'invention a pour caractéristique essentielle de comporter des blocs polyamide PA de type X.Y, dans lequel X le nombre de carbones de la diamine est compris dans la gamme de 4 à 14, de préférence de 6 à 14, et Y le nombre de carbones du diacide est compris dans la gamme de 6 à 18.

X est de préférence choisi parmi 6 ou 10, et Y est choisi parmi 10 ou 12 ; de préférence le PA X.Y est le PA 6.10 ou le PA 6.12 ; de préférence le PA 6.10. Avantageusement, la masse moléculaire moyenne en nombre (Mn) des blocs PA est comprise dans la gamme de 500 à 10000, de préférence de 1000 à 10000, de préférence de 2000 à 9000, de préférence de 2000 à 6000, de préférence de 2000 à 3000, de préférence de 2500 à 3000. Selon un autre mode de réalisation, la masse moléculaire moyenne en nombre (Mn) des blocs PA est comprise dans la gamme de 800 à 900.

Concernant les blocs PE du PEBA selon l'invention, PE est choisi parmi PTMG, PPG, PO3G et/ou PEG ; de préférence choisi parmi PTMG, PPG et/ou PO3G.

Avantageusement, la masse moléculaire moyenne en nombre (Mn) des blocs PE est comprise dans la gamme de 400 à 1000, de préférence de 500 à 1000, de préférence de 600 à 700, voire de 600 à 650.

Avantageusement, ledit copolymère comprend de 51 à 90 % en poids, de préférence de 60 à 90 % en poids, de préférence de 65 à 85 % en poids de blocs polyamide ; et respectivement de 49 à 10% en poids, de préférence de 40 à 10 % en poids, de préférence de 35 à 15 % en poids de blocs polyéther, sur le poids total de copolymère. Selon un autre mode de réalisation, ledit copolymère comprend de 55 à 65 % en poids de blocs polyamide et de 45 à 35% en poids de blocs polyéther, par rapport au poids total du copolymère.

Autres TPE utilisés comme matériau ou substrat C2

Les autres TPE utilisés dans le cadre de l'invention peuvent être choisis dans le groupe constitué des copolyéther bloc amides, copolyéther ou copolyesters bloc uréthanes et copolyéther bloc esters et des combinaisons de ceux-ci. On rappelle ci-après la définition générale de chacun de ces TPE.
Les copolyéther bloc amides, encore appelés copolymères à blocs polyéther et blocs polyamide, soit en abrégé « PEBA », résultent de la polycondensation de blocs polyamides à extrémités réactives avec des blocs polyéthers à extrémités réactives, telles que, entre autres :

1) blocs polyamides à bouts de chaîne diamines avec des blocs polyoxyalkylènes à bouts de chaînes dicarboxyliques ;
2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols ;
3) blocs polyamides à bouts de chaînes dicarboxyliques avec des polyétherdiols, les produits obtenus étant, dans ce cas particulier, des polyétheresteram ides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.
La masse molaire en nombre Mn des blocs polyamides est comprise entre 400 et 20000 g/mol et de préférence entre 500 et 10000 g/mol.
Les polymères à blocs polyamides et blocs polyéthers peuvent aussi comprendre des motifs répartis de façon aléatoire.
On peut utiliser avantageusement trois types de blocs polyamides.
Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.
A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.
A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).
On a par exemple des blocs PA4.12, PA4.14, PA4.18, PA6.10, PA6.12, PA6.14, PA6.18, PA9.12, PA10.10, PA10.12, PA10.14 et PA10.18.
Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha omega amino carboxylique, on peut citer les acides aminocaproïque, amino-7-heptanoïque, amino-11- undécanoïque et amino-12-dodécanoïque.
Avantageusement les blocs polyamides du deuxième type sont en polyamide 11, en polyamide 12 ou en polyamide 6.
Selon un troisième type, les blocs polyamides résultent de la condensation d'au moins un acide alpha oméga aminocarboxylique (ou un lactame), au moins une diamine et au moins un diacide carboxylique.
Dans ce cas, on prépare les blocs polyamide PA par polycondensation :

- de la ou des diamines aliphatiques linéaires ou aromatiques ayant X atomes de carbone ;

- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y) ;
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques.

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha omega amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque Pripol® par la société Unichema, ou sous la marque Empol® par la société Henkel) et les polyoxyalkylènes - $\alpha,\omega$ diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivantes :

- 6.6/6 dans laquelle 6.6 désigne des motifs hexaméthylènediamine condensée avec l'acide adipique. 6 désigne des motifs résultant de la condensation du caprolactame.
- 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

La masse Mn des blocs polyéther est comprise entre 100 et 6 000 g/mol et de préférence entre 200 et 3 000 g/mol.

De préférence, le polymère comprend de 1 à 80 % en masse de blocs polyéther et de 20 à 99 % en masse de blocs polyamide, de préférence de 4 à 80 % en masse de blocs polyéther et 20 à 96 % en masse de blocs polyamide.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyethylène glycol) c'est à dire ceux constitués de motifs oxyde d'éthylène, des blocs PPG (propylène glycol) c'est à dire ceux constitués de motifs oxyde de propylène, des blocs PO3G (polytriméthylène glycol) c'est-à-dire ceux constitués de motifs polytriméthylène ether de glycol (de tels copolymères avec des blocs polytriméthylene ether sont décrits dans le document US6590065), et des blocs PTMG c'est à dire ceux constitués de motifs tetraméthylène glycols appelés aussi polytétrahydrofurane. Les copolymères PEBA peuvent comprendre dans leur chaîne plusieurs types de polyéthers, les copolyéthers pouvant être à blocs ou statistiques.

On peut également utiliser des blocs obtenus par oxyéthylation de bisphenols, tels que par exemple le bisphenol A. Ces derniers produits sont décrits dans le brevet EP613919.

Les blocs polyéthers peuvent aussi être constitués d'amines primaires éthoxylées. A titre d'exemple d'amines primaires éthoxylées on peut citer les produits de formule :

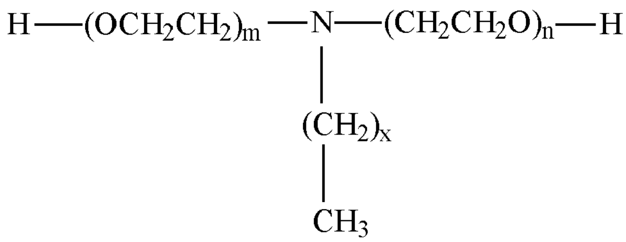

dans laquelle m et n sont compris entre 1 et 20 et x entre 8 et 18. Ces produits sont disponibles dans le commerce sous la marque Noramox® de la société CECA et sous la marque Genamin® de la société Clariant.

Les blocs souples polyéthers peuvent comprendre des blocs polyoxyalkylène à bouts de chaînes $NH_2$, de telles blocs pouvant être obtenues par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux Pebax® commercialisés par Arkema, aux Vestamid® commercialisés par Evonik®, aux Grilamid® commercialisés par EMS, qu'aux Kellaflex® commercialisés par DSM ou à tout autre PEBA d'autres fournisseurs.

Avantageusement, les copolymères PEBA ont des blocs PA en PA 6, en PA 11, en PA 12, PA 6.12, en PA 6.6/6, en PA 10.10 et/ou en PA 6.14, de préférence des blocs PA 11 et/ou PA 12 ; et des blocs PE en PTMG, en PPG et/ou en PO3G. Les PEBA à base de blocs PE constitués majoritairement de PEG sont à ranger dans la gamme des PEBA hydrophiles. Les PEBA à base de blocs PE constitués majoritairement de PTMG sont à ranger dans la gamme des PEBA hydrophobes.

Avantageusement, ledit PEBA utilisé dans la composition selon l'invention est obtenu au moins partiellement à partir de matières premières bio-ressourcées.

Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du $^{14}C$. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04). A titre d'exemple, les PEBA à base de polyamide 11 proviennent au moins en partie de matières premières bio-ressourcées et présentent une teneur en carbone bio-ressourcé d'au moins 1%, ce qui correspond à un ratio isotopique de $^{12}C/^{14}C$ d'au moins $1,2 \times 10^{-14}$. De préférence, les PEBA selon l'invention comprennent au moins 25, de préférence au moins 35 et en particulier au moins 50% en masse de carbone bio-ressourcé sur la masse totale de carbone, ce qui correspond à un ratio isotopique $^{12}C/^{14}C$ d'au moins $0,6.10^{-12}$. Cette teneur est avantageusement plus élevée, notamment jusqu'à 100%, qui correspond à un ratio isotopique $^{12}C/^{14}C$ de $1,2 \times 10^{-12}$, dans le cas par exemple de PEBA à blocs PA 11 et blocs PE comprenant du PO3G, PTMG et/ou PPG issus de matières premières d'origine renouvelable.

Comme TPE pour le matériau C2, on peut également utiliser un copolyéther bloc uréthane (abrégé TPU) comprenant un bloc souple de poly(oxyalkylène) et un bloc polyuréthane. Les blocs polyuréthane peuvent être obtenus par réaction entre un diisocyanate, un diol, et si nécessaire, un agent d'allongement de chaîne. Les blocs souples polyéther peuvent être tels que décrits ci-dessus en relation avec les PEBA.

Le diisocyanate est notamment un diisocyanate aliphatique tel que le diisocyanate d'hexaméthylène (HMDI), ou le 2,2,4-triméthylhexaméthylène diisocyanate; un diisocyanate alicyclique tel que le cyclohexane 1,4-diisocyanate, dicycloalkylmethane-4,4'-diisocyanate ou l'isophorone diisocyanate (IPDI); un diisocyanate tel que le diisocyanate de phénylène, le diisocyanate de tolylène (TDI) ou le diphénylméthane-4,4'-diisocyanate aromatique (MDI); un diisocyanate arylaliphatique tel que le diisocyanate de xylylène; et d'autres. En tant que diisocyanate, on peut également utiliser un composé ayant un groupe alkyle (par exemple, un groupe méthyle) substitué sur une chaîne principale de celui-ci ou d'un cycle. Les diisocyanates ci-dessus peuvent être utilisés seuls ou en combinaison.

Des exemples du diol comprennent un diol de polyester [par exemple, un polyester diol (polyester diol aliphatique) dérivé d'un composant acide dicarboxylique aliphatique (par exemple un acide dicarboxylique aliphatique en C4-12, tel que l'acide adipique), un composant diol aliphatique (par exemple, un diol aliphatique en C2-12, tel que l'éthylène glycol, le propylène glycol, le butanediol, ou le néopentyl glycol), et/ou un composant lactone (par exemple, une lactone en C4-12 telle que l'ε-caprolactone), par exemple un poly(éthylène adipate), un poly(1,4-butylène adipate), et un poly (1,6- hexylène adipate), un poly-ε-caprolactone], un polyéther-diol [par exemple, un polyéther-diol aliphatique, par exemple, un poly(oxyalkylène en C2-4) glycol, tel qu'un polyéthylèneglycol, un poly (oxytriméthylène) glycol, un polypropylène glycol, ou un polytétraméthylène glycol (PTMG), et un copolymère à blocs de poly (oxyalkylène) glycol (par exemple, un copolymère à blocs PEG-PPG); un polyéther diol aromatique, par exemple, un produit d'addition d'un diol aromatique avec un oxyde d'alkylène, tel qu'un bisphénol A - oxyde d'alkylène (par exemple, un produit d'addition d'un oxyde d'alkylène en C2-4 tel que l'oxyde d'éthylène l'oxyde de propylène); un polyester ether diol (un polyester diol obtenu en utilisant le polyéther-diol en tant que partie d'un composant de diol); un polycarbonate diol. Ce(s) diol(s) peu(ven)t être utilisé(s) seul ou en combinaison. Parmi ces diols, le polyester diol ou le polyéther diol tel que le polytétraméthylène glycol est utilisé dans de nombreux cas.

Comme agent d'allongement de chaîne, on peut utiliser un glycol [par exemple, un glycol à chaîne courte, par exemple alcanediol en C2-10, tel que l'éthylène glycol, le propylène glycol, le 1,4-butanediol ou le 1,6-hexanediol; un bishydroxyethoxybenzene (BHEB)], et en outre une diamine [par exemple, une diamine aliphatique, telle qu'une alkylènediamine en C2-10, par exemple, l'éthylènediamine, la triméthylènediamine, la tétraméthylènediamine, ou l'hexaméthylènediamine; une diamine alicyclique tel que l'isophorone diamine; une diamine aromatique telle que la phénylène ou xylylène diamine. L'agent d'allongement de chaîne (s) peut être utilisé seul ou en combinaison de plusieurs types d'allongeurs de chaine.

Le polyuréthane thermoplastique (TPU) préféré est obtenu en utilisant un diol et un diisocyanate en quantité sensiblement équivalente. De manière alternative, le polyisocyanate comporte une petite quantité d'isocyanate libre (ou qui n'a pas réagi) résiduel, obtenu en utilisant une quantité légèrement en excès de diisocyanate par rapport au diol.

De préférence on utilise un TPU obtenu en utilisant un diol [par exemple, un polyester diol ou polyéther-diol], un diisocyanate, et un glycol (par exemple, un glycol à chaîne courte) comme agent d'allongement de chaîne. Le TPU comprend un segment dur (bloc dur) qui est composé d'un polyuréthane formé à partir d'un glycol et d'un diisocyanate, et un segment mou (bloc mou) composé d'un polyéther-diol [par exemple, un polyéther-diol aliphatique (par exemple, un poly (oxyéthylène) glycol)], un polyester diol (par exemple, un polyester diol aliphatique) ou autres. A titre d'exemples de TPU, on peut notamment citer les élastomères suivants : polyester uréthane, polyester éther uréthane, polyéther uréthane, polycarbonate uréthane, et d'autres en fonction de l'espèce du segment mou. Parmi les TPU, les élastomères de polyester uréthane, de polyester éther uréthane, de polyéther uréthane, et leurs mélanges, sont préférés. Par ailleurs, la masse moléculaire moyenne en nombre du polyéther (polyoxyalkylène glycol) est de préférence comprise dans la gamme de 100 à 10000, de préférence de 300 à 6000, et plus préférablement de 500 à 4000.

Le matériau C2 peut comporter un seul TPU ou plusieurs de ces TPU en mélange.

Comme TPE pour le matériau C2, On peut également utiliser un copolyéther bloc ester (abrégé CoPE) comprenant un bloc souple de poly(oxyalkylène) et un bloc polyester. Le bloc polyester peut être obtenu par polycondensation par estérification d'un acide carboxylique, tel que l'acide isophtalique ou l'acide téréphtalique ou un acide carboxylique bio-sourcé (tel que l'acide furane dicarboxylique), avec un glycol, tel que l'éthylène glycol, le triméthylène glycol, le propylène glycol ou le tétraméthylène glycol. Les blocs souples polyéther peuvent être tels que décrits ci-dessus dans la description des PEBA.

La présente invention a également pour objet l'utilisation d'un PEBA dans un procédé d'adhérence directe entre deux matériaux TPE pour augmenter la force de pelage entre ces matériaux, caractérisée en ce que le PEBA est un copolymère selon l'invention décrite ci-dessus.

La présente invention a notamment pour objet une composition à base de copolymère selon l'invention décrite ci-dessus, la composition étant caractérisée en ce qu'elle comprend :

- de 51% à 99,9% en poids dudit copolymère,
- de 0,1 à 49% en poids d'au moins un autre composant choisi parmi : les PEBA de composition différente et/ou de module de flexion différent de celle/celui du copolymère, les PA, les POF, les COPE, les TPU, les charges et/ou fibres de renfort, notamment de verre ou de carbone, les colorants, les absorbeurs UV, les antioxydants, notamment phénoliques, ou à base de phosphore ou à base de soufre, les stabilisants lumière de type amine encombrée ou HALS, et leurs mélanges.

La présente invention a encore pour objet un procédé d'adhérence directe d'un matériau copolymère (C1) selon l'invention avec un matériau copolymère TPE (C2), C2 étant de composition identique et de même module de flexion que C1, ou de composition identique mais de module de flexion différent de C1, ou C2 est un matériau TPE choisi parmi : les PEBA de composition différente de celle dudit copolymère C1, les COPE, et/ou les TPU ; le procédé selon l'invention étant caractérisé en ce que l'assemblage s'effectue par un procédé comprenant le chauffage d'au

moins un des deux matériaux copolymères C1 et/ou C2, de façon à faire adhérer un matériau à l'autre.

Selon un mode de réalisation avantageux du procédé de l'invention, le matériau C1 est fondu ou ramolli sous chauffage, et le matériau C1 fondu est porté en contact avec au moins une partie du matériau C2 de la série des polyuréthanes thermoplastiques TPU pour faire adhérer les deux matériaux.

Selon un deuxième mode de réalisation avantageux du procédé de l'invention, le matériau C2 de la série des polyuréthanes thermoplastiques TPU est fondu ou ramolli sous chauffage, et le matériau C2 fondu est porté en contact avec au moins une partie du matériau C1 pour faire adhérer les deux matériaux.

Selon un troisième mode de réalisation avantageux du procédé de l'invention, le matériau C1 et le matériau C2 de la série des TPU sont indépendamment fondus ou ramollis sous chauffage, et le matériau C1 fondu est porté en contact avec au moins une partie du matériau C2 fondu pour faire adhérer les deux matériaux.

Avantageusement, dans le procédé d'assemblage selon l'invention, le matériau C1 et le matériau C2 sont assemblés par un procédé d'adhérence directe choisi parmi : surmoulage, pressage à chaud, coextrusion, thermoformage, moulage par injection, moulage par extrusion, moulage par soufflage, et leurs mélanges ; de préférence par surmoulage d'un matériau sur l'autre, de préférence par surmoulage du copolymère selon l'invention sur un TPE, de préférence par surmoulage du copolymère sur un TPU. Avantageusement, la température d'assemblage du procédé d'adhérence directe selon l'invention est comprise dans la gamme de 220 à 300°C, de préférence de 250 à 290°C, de préférence de 270 à 290°C.

Un tel procédé peut par exemple être réalisé en joignant les matériaux C1 et C2 dans un procédé de moulage, par injection, notamment injection bi-matière, injection bi-couleurs, multi-couleurs, bi-injection, co-injection. Il est également possible de surmouler une matière souple sur une matière rigide, de température de fusion Tf et/ou de température de transition vitreuse Tg supérieures à celles de la matière souple. Le PEBA selon l'invention peut en outre être surmoulé sur un insert métallique. D'autres procédés classiques peuvent être utilisés : thermoformage, moulage à chaud sous presse, moulage par insert, moulage par injection en sandwich, moulage par extrusion, notamment par co-extrusion, moulage par injection-soufflage, et autres procédés de mise en œuvre des matériaux TPE. L'homme du métier choisit le type de presse à injecter selon le type de moule, d'insert et de matériaux à injecter.

Selon un mode de réalisation particulier du moulage à chaud sous presse, 2 matériaux C1 et C2 sous forme de granules, poudre ou toute autre forme sont chargés dans un moule métallique. Selon un autre mode de réalisation, 2 matériaux C1 et C2, sous la forme d'articles préalablement moulés, sont chargés dans un moule métallique. Selon encore un

Selon encore un mode de réalisation du moulage par injection d'insert, un article composite moulé peut être produit par : moulage de l'un quelconque des matériaux C1 ou C2 à l'aide d'un procédé tel que, moulage par injection, moulage par extrusion, notamment de feuille, ou de film ; puis l'insertion ou la mise en forme dans un moule métallique de l'article ainsi moulé ; puis l'injection de l'autre des matériau C1 ou C2 non encore moulé dans un espace ou une cavité entre l'article moulé et le moule métallique. Dans le moulage par injection d'insert, l'article moulé devant être inséré dans le moule métallique est de préférence préchauffé.

La présente invention a aussi pour objet un article composite comprenant au moins deux matériaux polymères adhérant directement l'un à l'autre, l'un de composition conforme à l'invention décrite ci-dessus, l'autre en TPE choisi parmi : PEBA identique (de module de flexion différent de celui du copolymère), PEBA de composition différente de celle dudit copolymère, COPE, et/ou TPU.

La présente invention a également pour objet l'utilisation d'un article selon l'invention, pour la fabrication d'un équipement de sport, d'un élément de chaussure, notamment de chaussure de sport, semelle de chaussure, notamment crampon, élément de ski, notamment de chaussure de ski de montagne, de free-ride ou de télémark, de ski de fond, de raquettes de neige ou de coque de ski, d'un dispositif médical, d'une courroie de transmission, comme additif antistatique, comme film imper-respirant, comme support de molécules actives, comme agent colorant, agent de soudure, comme élément de décoration, et/ou comme additif pour polyamide.

L'article peut notamment être au moins une partie de pièce choisie parmi les pièces automobiles, textiles, les tissés ou non tissés, l'habillement, les chaussures, les articles de sport, les articles de loisirs, les objets électroniques, le matériel informatique, les équipements de santé, les lunettes, les additifs industriels, l'emballage et les produits ménagers. On peut en particulier citer les tableaux de bord, les airbags, les semelles de chaussure de sport, les balles de golf, les tubes à usage médical, les cathéters, les ballons d'angioplastie, les courroies péristaltiques, les bandes de courroies transporteuses, les produits imper-respirants, les peaux et/ou cuirs synthétiques, les films thermoplastiques ou d'emballage.

## EXEMPLES

Les exemples suivants illustrent l'invention sans la limiter. Les normes utilisées dans les exemples correspondent également à celles utilisées plus généralement pour caractériser l'invention dans la description ou les revendications.

Matériaux utilisés :

Dans les exemples qui suivent :

PEBA 1 : PA 12-PTMG (Mn : 4000-1000)
PEBA 1 est un copolymère à blocs PA12 et blocs PTMG de masses moléculaires moyennes en nombre (Mn) respectives 4000 - 1000.

PEBA 2 : PA 6.10-PTMG (2500-650)
PEBA 2 est un copolymère selon l'invention, à blocs PA6.10 et blocs PTMG de masses moléculaires moyennes en nombre (Mn) respectives 2500 - 650.

PEBA 3 : PA11 -PTMG (1000-1000)
PEBA 3 est un copolymère à blocs PA11 et blocs PTMG de masses moléculaires moyennes en nombre (Mn) respectives 1000 - 1000.

PEBA 4 : PA 6.10-PTMG (850-650)
PEBA 4 est un copolymère selon l'invention, à blocs PA6.10 et blocs PTMG de masses moléculaires moyennes en nombre (Mn) respectives 850 - 650.

TPU 1 : est un TPU aromatique, à blocs Ether (PTMG), 95 shore A, de marque Elastollan® 1195A (BASF), et de module de flexion 53 MPa.

TPU 64 shore D : est un TPU aromatique, à blocs Ether (PTMG), 95 shore A, de marque Elastollan® 1164D.

TPU 2 : est un TPU à base de polyester avec une dureté Shore A de 91, de marque Elastollan® 1195A (BASF).

Exemple 1 - Comparaison des forces de pelage (kg/cm) après surmoulage de différents PEBAS sur insert TPU ou PEBA

On a effectué sur les produits surmoulés à différentes températures d'injection, un essai de pelage selon la norme ISO11339.

Les résultats de ces essais sont donnés dans le tableau 1.

On compare dans le tableau 1 suivant l'adhérence de différentes compositions de PEBAs sur insert TPU ou sur insert PEBA, après adhérence directe par surmoulage à différentes températures d'injection.

*Tableau 1*

| Insert | Grade | Forces de pelage (kg/cm) pour différentes témératures d'injection (°C) | | | |
|---|---|---|---|---|---|
| | | **250** | **260** | **270** | **280** |
| TPU 1 | PEBA 1 | **7** | | **3** | |
| | PEBA 2 | **14** | **14** | **18** | |
| | PEBA 1 + PEBA 2 (50/50) | | | **8** | |
| | PEBA 2 + PEBA 3 (30/70) | **12** | | | **14** |
| TPU 2 | PEBA 1 | | **10** | | |
| | PEBA 4 | | **15.5** | | |
| PEBA 2 | PEBA 2 | | | **9,3** | |
| PEBA 2 + PEBA 3 (30/70) | PEBA 2 + PEBA 3 (30/70) | **13** | | | **12** |

On constate que le PEBA 2 (PA 6.10-PTMG) et le PEBA 4 (PA 6.10-PCTMG) selon l'invention présentent une excellente adhérence sur TPU, caractérisée par une force de pelage de 14 kg/cm obtenue pour une température de

surmoulage de 250 °C et 15.5 kg/cm obtenue pour une température de surmoulage de 260 °C, respectivement.

De plus, une composition selon l'invention comportant 50% en poids de PEBA 1 et 50% en poids de PEBA 2 présente une adhérence directe nettement améliorée sur TPU (8 kg/cm) par rapport au comparatif PEBA 1 seul (3 kg/cm), après surmoulage sur insert TPU à 270 °C. Le sourmoulage de PEBA 2 sur lui-même à 270 °C conduit également à une adhérence conforme à celle de l'invention, avec une force de pelage supérieure à 9 kg/cm.

De même, le mélange par dry-blend de PEBA 2 (30% en poids) + PEBA 3 (70% en poids) présente une adhérence directe d'au moins 12 kg/cm sur TPU ou sur le produit moulé lui-même (obtenu à partir du même mélange par dry blend ou mélange à sec.

Exemple 2 - Comparaison des propriétés mécaniques

Module de flexion (MPa) selon la norme ISO 178 :

TPU 64 shore D : 270 MPa
PEBA 1 : 285 MPa
PEBA 2 : 320 MPa

Rigidification à froid : mesurée par l'évolution du module E' (MPa) en fonction de la température T ou par l'évolution du rapport E'(T) / E'(23°C) en fonction de la température sur le domaine -40°C, +23°C (Graphe de la figure 1) : Plus la valeur de ce rapport est faible, moins la rigidité du produit évolue.

Comme le montrent les Graphes 1 et 2, le PEBA 2 selon l'invention, comme le PEBA 1, présentent une plus faible rigidification à froid entre -40 et 23°C, que le TPU 64 shore D.

Tanδ : Facteur d'amortissement/Test de nervosité à température ambiante (23°C) :

Le test de nervosité consiste à solliciter l'extrémité d'une éprouvette et à observer la fréquence des oscillations et le temps nécessaire à l'amortissement de ces oscillations. Le mouvement de l'extrémité du matériau se traduit par une sinusoïde (du type $y = y_0 e^{-at} \cos(\overline{\varpi t})$) dont l'amplitude décroit au cours du temps.

Plus la fréquence est élevée et plus l'amortissement est faible, plus le matériau est jugé nerveux.

L'indice de nervosité N est défini par

$$N = \frac{f}{\tan(\delta)}$$

Avec f, fréquence d'oscillation

Tan δ, facteur d'amortissement calculé à partir des paramètres α et ω = 2π/T.

$$Tan\,\delta = \frac{2\alpha\varpi}{\varpi^2 + \alpha^2}$$

Les essais ont été réalisés à 23°C, deux niveaux de déformation ont été appliqués : 1 et 3%, et le tableau 2 suivant indique les résultats de nervosité :

***Tableau 2***

| Déf. à 1% (23°C) | PEBA 2 | PEBA 1 |
|---|---|---|
| Fréquence (Hz) | 43 ± 1 | 51 ± 1 |
| Tan delta | 0,117 | 0,118 |

| Déf. à 3% (23°C) | PEBA 2 | PEBA 1 |
|---|---|---|
| Fréquence (Hz) | 124 ± 4 | 141 ± 1 |
| Tan delta | 0.147 | 0.136 |

La fréquence d'oscillation de PEBA 1 est un peu plus élevée que celle du PEBA 2. Les valeurs de Tan δ sont sensiblement les mêmes pour PEBA 1 et PEBA 2. De même, les indices de nervosité des PEBA 1 et PEBA 2 sont

relativement proches.

Ces résultats montrent que le PEBA 2 selon l'invention présente un comportement dynamique avec effet ressort, donc une bonne « nervosité ».

Essais de choc Charpy avec entaille (V)

On mesure la résilience $R_{ch}$ (kJ/m$^2$) à 23°C selon la norme ISO 179 1eA, des 3 TPE, le tableau 3 suivant montre les résultats obtenus :

***Tableau 3***

| | TPU 64 shore D | PEBA 2 selon l'invention | PEBA 1 |
|---|---|---|---|
| **Rch (kJ/m$^2$) V notch, 23°C** | **Non casse** | **Non casse** | **Non casse** |

A 23°C, le PEBA 1, PEBA 2, et le TPU 64 shore D ont un comportement similaire, dans les 3 cas le produit ne casse pas.

Comportement en fatigue - essais de Ross Flex (norme ASTM D1052)

L'essai de Ross flex est un essai de fatigue utilisé pour évaluer la longévité des matériaux lorsque ces derniers sont sollicités en flexion de manière répétée (fréquence de 1.7 cycles/s). Le test permet de dire si le produit casse ou non au bout de n cycles (généralement n = 150.000).

Typiquement, la déformation appliquée est de l'ordre de 5% pour une éprouvette de 2 mm et sollicitée d'un angle de 60°. Cette déformation dépend de l'épaisseur du matériau et de l'angle de sollicitation.

A rayon de courbure constant, plus l'épaisseur e augmente, plus la déformation augmente. A épaisseur constante, plus le rayon de courbure R diminue, plus la déformation augmente.

La déformation appliquée à l'éprouvette est donnée par :

$$\varepsilon = \frac{e}{2(R - e/2)}$$

Angle de sollicitation : 60°
Largeur éprouvette : 20 mm
Température : -10°C
Nombre de cycles : 150.000
Fréquence : 100 cycles/min.

Le PEBA 1 et le PEBA 2 présentent une bonne résistance à la fatigue puisqu'ils passent les 150000 cycles.

De plus le PEBA 2 passe les 150000 cycles après avoir subi un traitement thermique dans les conditions suivantes : 7 jours, à une température de 70°C, et sous 95% d'humidité.

Comparaison de la densité de différents TPE

La densité est mesurée selon la norme ISO 1183 :

TPU 64 shore D : 1,24
PEBA 1 : 1,01
PEBA 2 : 1,06

**Revendications**

1. Copolymère à blocs polyamides PA et blocs polyéthers PE, dans lequel PA est de type X.Y, X le nombre de carbones de la diamine est compris dans la gamme de 6 à 14, et Y le nombre de carbones du diacide est compris dans la gamme de 6 à 18.

**2.** Copolymère selon la revendication 1, dans lequel X est choisi parmi 6 ou 10, et Y est choisi parmi 10 ou 12 ; de préférence le PA X.Y est le PA 6.10 ou le PA 6.12 ; de préférence le PA 6.10.

**3.** Copolymère selon l'une quelconque des revendications 1 ou 2, dans lequel PE est choisi parmi PTMG, PPG, PO3G et/ou PEG ; de préférence choisi parmi PTMG, PPG et/ou PO3G.

**4.** Copolymère selon l'une quelconque des revendications 1 à 3, dans lequel ledit copolymère comprend de 51 à 90 % en poids, de préférence de 60 à 90 % en poids, de préférence de 65 à 85 % en poids de blocs polyamide ; et respectivement de 49 à 10% en poids, de préférence de 40 à 10 % en poids, de préférence de 35 à 15 % en poids de blocs polyéther, sur le poids total de copolymère.

**5.** Copolymère selon l'une quelconque des revendications 1 à 4, dans lequel la masse moléculaire moyenne en nombre (Mn) des blocs PA est comprise dans la gamme de 500 à 10000, de préférence de 1000 à 10000, de préférence de 2000 à 9000, de préférence de 2000 à 6000, de préférence de 2000 à 3000, de préférence de 2500 à 3000.

**6.** Copolymère selon l'une quelconque des revendications 1 à 5, dans lequel la masse moléculaire moyenne en nombre (Mn) des blocs PE est comprise dans la gamme de 400 à 1000, de préférence de 500 à 1000, de préférence de 600 à 700, (de préférence de 600 à 650.

**7.** Composition à base de copolymère selon l'une quelconque des revendications 1 à 6, **caractérisée en ce qu'**elle comprend :

- de 51 % à 99,9% en poids dudit copolymère,
- de 0,1 à 49% en poids d'au moins un autre composant choisi parmi : les PEBA de composition différente et/ou de module de flexion différent de celle/celui du copolymère, les PA, les POF, les COPE, les TPU, les charges et/ou fibres de renfort, notamment de verre ou de carbone, les colorants, les absorbeurs UV, les antioxydants, notamment phénoliques, ou à base de phosphore ou à base de soufre, les stabilisants lumière de type amine encombrée ou HALS, et leurs mélanges.

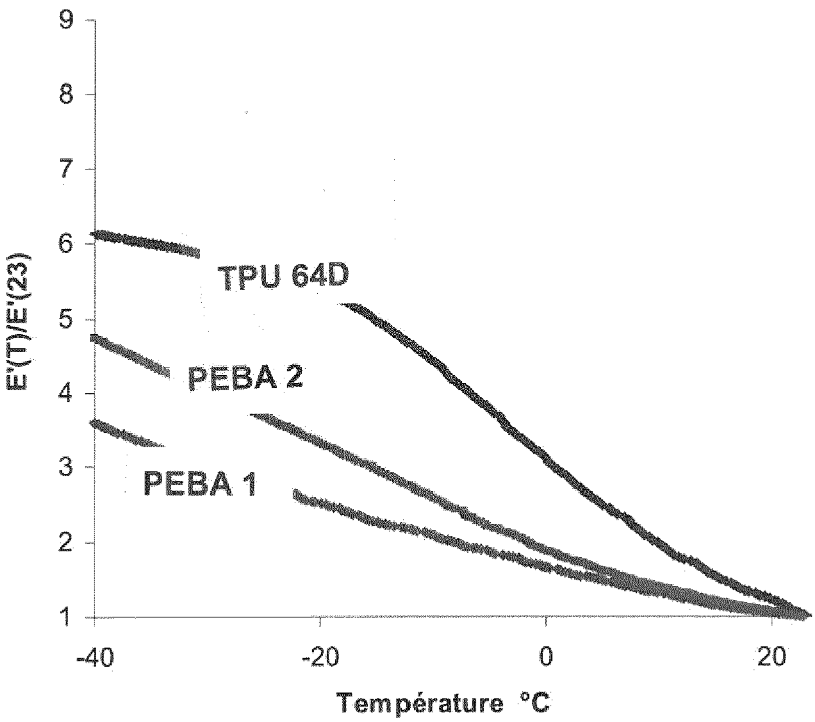


Figure 1

Europäisches Patentamt
European Patent Office
Office européen des brevets

# RAPPORT DE RECHERCHE EUROPEENNE

Numéro de la demande
EP 22 21 1994

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 011 550 A1 (ARKEMA FRANCE [FR]) 10 avril 2015 (2015-04-10) * revendication 17; exemple 3 * ----- | 1-4,6,7 | INV. C08G69/40 C08L77/00 |
| X | FR 2 897 355 A1 (ARKEMA SA [FR]) 17 août 2007 (2007-08-17) * page 3, ligne 12 - page 6, ligne 11; revendication 27 * ----- | 1,3-7 | |
| A,D | WO 95/12481 A1 (ATOCHEM ELF SA [FR]; AUBER YVES [FR]; TRON LOIC [FR]) 11 mai 1995 (1995-05-11) * voir les exemples * ----- | 1-7 | |
| A,D | WO 03/050159 A1 (DU PONT [US]) 19 juin 2003 (2003-06-19) * le document en entier * ----- | 1-7 | |
| A,D | WO 2004/037898 A1 (ATOFINA [FR]) 6 mai 2004 (2004-05-06) * le document en entier * ----- | 1-7 | DOMAINES TECHNIQUES RECHERCHES (IPC) C08G C08L |

Le présent rapport a été établi pour toutes les revendications

1

| Lieu de la recherche | Date d'achèvement de la recherche | Examinateur |
|---|---|---|
| Munich | 16 février 2023 | Friedrich, Christof |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 22 21 1994

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-02-2023

| Document brevet cité au rapport de recherche | Date de publication | Membre(s) de la famille de brevet(s) | Date de publication |
|---|---|---|---|
| FR 3011550 A1 | 10-04-2015 | CN 105612197 A | 25-05-2016 |
| | | EP 3055346 A1 | 17-08-2016 |
| | | FR 3011550 A1 | 10-04-2015 |
| | | JP 6466424 B2 | 06-02-2019 |
| | | JP 2016532728 A | 20-10-2016 |
| | | KR 20160068872 A | 15-06-2016 |
| | | US 2016251484 A1 | 01-09-2016 |
| | | WO 2015052127 A1 | 16-04-2015 |
| FR 2897355 A1 | 17-08-2007 | CA 2641931 A1 | 23-08-2007 |
| | | CA 2641932 A1 | 23-08-2007 |
| | | CN 101426833 A | 06-05-2009 |
| | | CN 101426834 A | 06-05-2009 |
| | | EP 1984424 A2 | 29-10-2008 |
| | | EP 1984425 A2 | 29-10-2008 |
| | | FR 2897355 A1 | 17-08-2007 |
| | | JP 5117408 B2 | 16-01-2013 |
| | | JP 5260319 B2 | 14-08-2013 |
| | | JP 2009526890 A | 23-07-2009 |
| | | JP 2009526891 A | 23-07-2009 |
| | | KR 20080093044 A | 17-10-2008 |
| | | KR 20080093050 A | 17-10-2008 |
| | | TW 200745219 A | 16-12-2007 |
| | | TW 200745220 A | 16-12-2007 |
| | | US 2009017246 A1 | 15-01-2009 |
| | | US 2009023868 A1 | 22-01-2009 |
| | | US 2012043676 A1 | 23-02-2012 |
| | | US 2012065340 A1 | 15-03-2012 |
| | | US 2013296502 A1 | 07-11-2013 |
| | | WO 2007093750 A2 | 23-08-2007 |
| | | WO 2007093751 A2 | 23-08-2007 |
| WO 9512481 A1 | 11-05-1995 | AU 674465 B2 | 19-12-1996 |
| | | CA 2152510 A1 | 11-05-1995 |
| | | CN 1122583 A | 15-05-1996 |
| | | EP 0679119 A1 | 02-11-1995 |
| | | JP H08505333 A | 11-06-1996 |
| | | KR 960700139 A | 19-01-1996 |
| | | WO 9512481 A1 | 11-05-1995 |
| WO 03050159 A1 | 19-06-2003 | AU 2002335132 A1 | 23-06-2003 |
| | | CA 2427205 A1 | 10-06-2003 |
| | | CN 1481405 A | 10-03-2004 |
| | | EP 1453881 A1 | 08-09-2004 |
| | | JP 4934270 B2 | 16-05-2012 |
| | | JP 2005511834 A | 28-04-2005 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE RELATIF A LA DEMANDE DE BREVET EUROPEEN NO.

EP 22 21 1994

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-02-2023

| Document brevet cité au rapport de recherche | Date de publication | Membre(s) de la famille de brevet(s) | Date de publication |
|---|---|---|---|
| | | KR 20040064603 A | 19-07-2004 |
| | | MX PA03005769 A | 26-02-2004 |
| | | US 6590065 B1 | 08-07-2003 |
| | | WO 03050159 A1 | 19-06-2003 |
| WO 2004037898 A1 | 06-05-2004 | AU 2003285447 A1 | 13-05-2004 |
| | | CA 2503074 A1 | 06-05-2004 |
| | | CN 1708538 A | 14-12-2005 |
| | | EP 1560872 A1 | 10-08-2005 |
| | | FR 2846332 A1 | 30-04-2004 |
| | | JP 2006503951 A | 02-02-2006 |
| | | KR 20050067198 A | 30-06-2005 |
| | | US 2005165210 A1 | 28-07-2005 |
| | | WO 2004037898 A1 | 06-05-2004 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 197845 A
- EP 179700 A
- EP 0679119 A
- US 6590065 B
- EP 613919 A
- JP 2004346274 B
- JP 2004352794 B
- EP 1482011 A
- FR 2846332